# EUROPÄISCHE PATENTSCHRIFT

(11) **EP 4 278 102 B1**
(45) Veröffentlichungstag und Bekanntmachung des Hinweises auf die Patenterteilung: **11.02.2026**
(21) Anmeldenummer: 21839882.4
(22) Anmeldetag: 15.12.2021
(51) Int. Cl.: F16B 37/04, F16B 2/24

(54) **SCHRAUBENMUTTER MIT SCHRAUBKÄFIG**
SCREW NUT HAVING SCREW CAGE
ÉCROU DE VIS DOTÉ D'UNE CAGE À VIS

(30) Priorität: 13.01.2021 DE 102021100461
(43) Veröffentlichungstag der Anmeldung: 22.11.2023
(73) Patentinhaber: Audi AG, 85045 Ingolstadt (DE)
(72) Erfinder: BAIER, Sebastian, 36163 Poppenhausen (DE)
(86) Internationale Anmeldenummer: PCT/EP2021/085816
(87) Internationale Veröffentlichungsnummer: WO 2022/152490

(56) Entgegenhaltungen:
- EP-A1- 0 266 668
- CN-A- 101 839 269
- FR-A1- 2 983 269
- US-A- 4 667 916
- US-A1- 2013 004 259

## Beschreibung

Die Erfindung betrifft gemäß Oberbegriff des Patentanspruchs 1 eine Schraubenmutter mit einem aus Blech gefertigten Käfig bzw. Schraubkäfig.

Aus dem Stand der Technik sind insbesondere aus Blech gefertigte Schraubkäfige bekannt, mit denen vor allem an unzugänglichen Stellen eine Schraubenmutter beim Anziehen oder Lösen der eingreifenden Schraube (oder dergleichen) festgehalten werden kann, sodass sich diese nicht mitdreht. Eine aus Schraubenmutter und Schraubkäfig gebildete Einheit wird auch als Käfigmutter bezeichnet.

Die Patentschrift DE 10 2005 059 523 A1 beschreibt eine sogenannte Flansch-Käfigmutter. Diese Flansch-Käfigmutter umfasst eine übliche Flanschmutter mit einem in der Aufsicht sechseckigen Antriebsteil. Die Flansch-Käfigmutter umfasst ferner einen an der Mutter angeordneten Käfig, welcher aus einem mehrfach gefalteten Blech ausgestanzt und gebogen ist. Der Käfig weist ein Klemmteil und ein Halteteil auf. Das Halteteil besteht aus einer ebenen Blechplatte mit einer umlaufend geschlossenen Öffnung, in der das sechseckige Antriebsteil der Mutter passgenau und drehfest sitzt.

Die nächstliegende US 2013/0004259 A1 beschreibt ein Befestigungselement mit einer hexagonalen Schraubenmutter (Fastener) und einem aus Blech gefertigten Schraubkäfig (Retainer). Die Schraubenmutter ist in einer Öffnung des Schraubkäfigs angeordnet, derart, dass der Schraubkäfig und die Schraubenmutter gegeneinander nicht verdrehbar sind. Die Öffnung weist mehrere als Blechdurchzüge ausgebildete Laschen auf, die an den seitlichen Drehmomentübertragungsflächen der Schraubenmutter anliegen. Zudem ist die Öffnung zwischen den Laschen mit Ausschnitten ausgebildet, durch die die Kantenbereiche der Schraubenmutter freigestellt sind.

Zum Stand der Technik wird ferner noch hingewiesen auf die Patentschriften WO 2012/156271 A9, DE 10 2011 000 660 A1, DE 691 00 071 T2, FR 2 983 269 A1, CN 101839269 A, EP 0 266 668 A1 und US 4,667,916 A.

Bei der erfindungsgemäßen Schraubenmutter mit Schraubkäfig des Patentanspruchs 1 ist der Schraubkäfig so ausgebildet, dass auf die Schraubenmutter hohe Haltkräfte bzw. hohe Gegen(halte)momente aufgebracht werden können. Zusätzliche Merkmale der Erfindung ergeben sich aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und der Zeichnung.

Die Erfindung sieht eine, insbesondere metallische, Schraubenmutter mit einem aus Blech gefertigten Schraubkäfig vor (womit eine Einheit bzw. Verbindung aus Schraubenmutter und Schraubkäfig gemeint ist, die auch als Käfigmutter bezeichnet werden kann). Der Schraubkäfig weist einen die Schraubenmutter festhaltenden Halteabschnitt (Halteteil) und einen den Halteabschnitt (bspw. gegen ein Karosserieteil) abstützenden Klemmabschnitt (Klemmteil) auf. Der Halteabschnitt ist mit einer umlaufend geschlossenen Öffnung ausgebildet, in der drehfest die Schraubenmutter angeordnet ist bzw. welche die Schraubenmutter drehfest umgreift. Erfindungsgemäß ist vorgesehen, dass die Öffnung im Halteabschnitt des Schraubkäfigs mehrere als Blechdurchzüge ausgebildete Laschen, insbesondere zungenartige Laschen, aufweist, die an den (äußeren) seitlichen Drehmomentübertragungsflächen bzw. Werkzeuganlageflächen der Schraubenmutter anliegen.

Die als Blechdurchzüge ausgebildeten Laschen sind am inneren Rand der Öffnung angeordnet und erstrecken sich insbesondere, zumindest teilweise, in axialer Richtung der Schraubenmutter und können daher auch als aufgestellte Laschen bezeichnet werden. Bevorzugt sind die Laschen in Umfangsrichtung gleichmäßig verteilt angeordnet, wobei für jede Drehmomentübertragungsfläche der Schraubenmutter eine Lasche vorgesehen ist. Bei der Schraubenmutter handelt es sich um eine Sechskantmutter, insbesondere um eine Sechskant-Flanschmutter, wobei für jede der Drehmomentübertragungsflächen an der Schraubenmutter, also für alle sechs Drehmomentübertragungsflächen, am Schraubkäfig jeweils eine Lasche vorgesehen ist.

Die Laschen bewirken durch einen Klemmeffekt sehr hohe Haltkräfte zur axialen Fixierung der Schraubenmutter im Schraubkäfig und begünstigen auch das Aufbringen von Gegenmomenten (zur Drehmomentabstützung) auf die Schraubenmutter. Durch den flächigen Berührungskontakt zwischen den Laschen und der Schraubenmutter wird die Kratzer- und Spanbildung beim Vormontieren (d. h. beim Einsetzen der Schraubenmutter in die Öffnung des Schraubkäfigs) reduziert, insbesondere an einer beschichteten Schraubenmutter (s. u.). Dadurch wird im Weiteren auch die Korrosionsgefahr verringert.

Erfindungsgemäß ist die Öffnung (im Halteabschnitt des Schraubkäfigs) zumindest abschnittsweise größer ausgebildet als die Schraubenmutter. Dadurch sitzt die Schraubenmutter nicht passgenau in der Öffnung, sondern zwischen beiden ist, zumindest in den betreffenden Abschnitten, ein Spalt vorhanden, der einen geringen Bewegungsfreiraum (Spiel) ermöglicht. Dieser Spalt bzw. Bewegungsfreiraum erleichtert das Vormontieren und reduziert die Kratzer- und Spanbildung. Der Spalt ist bevorzugt höchstens wenige Zehntel Millimeter breit.

Die Schraubenmutter kann eine Beschichtung, insbesondere eine Korrosionsschutzbeschichtung (bspw. eine Verzinkung), aufweisen. Ein Verkratzen oder Abreiben dieser Beschichtung kann durch die oben beschriebenen Maßnahmen (flächiger Berührungskontakt der Laschen und/oder Spalt bzw. Bewegungsfreiraum) weitgehend verhindert werden.

Erfindungsgemäß ist die Öffnung (im Halteabschnitt des Schraubkäfigs) mit zusätzlichen Formschlusselementen ausgebildet, die in den Kantenbereichen zwischen den Drehmomentübertragungsflächen an der Schraubenmutter anliegen bzw. angreifen, gegebenenfalls mit einem Spalt bzw. Spiel (s. o.). Für jede Kante der Schraubenmutter ist ein zusätzliches Formschlusselement vorgesehen. Es ist eine gleiche Anzahl an Laschen und zusätzlichen Formschlusselementen, die jeweils zwischen den Laschen angeordnet sind, vorgesehen (d. h. sechs Laschen und sechs zusätzliche Formschlusselemente). Bevorzugt ragen die zusätzlichen Formschlusselemente vom Öffnungsrand in Richtung der Schraubenmutter ab und erstrecken sich insbesondere in der Ebene des Halteabschnitts. Die zusätzlichen Formschlusselemente ermöglichen die Übertragung sehr hoher Dreh- bzw. Gegenmomente (zur Drehmomentabstützung).

Dies ermöglicht eine Funktionstrennung, derart, dass die Laschen im Wesentlichen zur axialen Fixierung der Schraubenmutter im Schraubkäfig und die zusätzlichen Formschlusselemente im Wesentlichen zur Drehmomentabstützung vorgesehen sind. Beim Anziehen oder Lösen einer in die Schraubenmutter eingreifenden Schraube können sich die Laschen elastisch verformen, sodass die Drehmomentabstützung im Wesentlichen nur über die zusätzlichen Formschlusselemente erfolgen kann.

Erfindungsgemäß sind die zusätzlichen Formschlusselemente an ihren der Schraubenmutter zugewandten Enden gabelartig ausgebildet, insbesondere mit jeweils zwei Zacken bzw. Zinken, welche jeweils beidseitig neben den Kanten (die zwischen den Drehmomentübertragungsflächen ausgebildet sind) der Schraubenmutter anliegen bzw. angreifen. Bevorzugt sind die Innenbereiche dieser gabelartigen Enden, womit insbesondere die Bereiche zwischen den beiden Zacken bzw. Zinken gemeint sind, verrundet bzw. mit Verrundungen ausgebildet, um Kerbwirkungen zu reduzieren und insbesondere um Kerbspannungen zu vermeiden.

Die Schraubenmutter ist bevorzugt mit einem M10-, M12- oder M14-Innengewinde (oder größer) ausgebildet. Somit sind mitunter vergleichsweise hohe Anzieh- und Lösemomente vorgesehen, die mithilfe des Schraubkäfigs abgestützt werden können.

Der Schraubkäfig ist bevorzugt als einstückiges Blechteil (Stanz-Umformteil) ausgebildet und ist insbesondere aus einem Federstahlblech gefertigt. Das Blech weist bevorzugt eine Dicke von 1,0 mm bis 1,5 mm auf.

Die Erfindung wird nachfolgend in nicht einschränkender Weise anhand der Zeichnung näher erläutert. Die gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt in zwei Einzeldarstellungen ein erfindungsgemäßes Ausführungsbeispiel einer Schraubenmutter mit einem Schraubkäfig.
- Fig. 2: zeigt ein nicht-erfindungsgemäßes Ausführungsbeispiel einer Schraubenmutter mit einem Schraubkäfig.

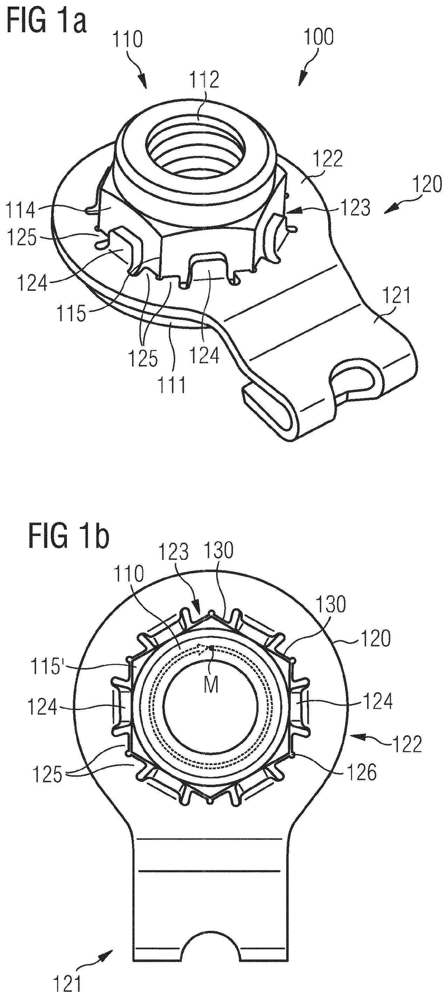

In Fig. 1 ist die Schraubenmutter 110 als Sechskantmutter mit einem Flansch 111 (sogen. Sechskant-Flanschmutter) und einem als Verliersicherung dienenden Kunststoffeinsatz 112 (sogen. Sicherungsmutter) ausgebildet. Der als einstückiges Blechteil ausgebildete Schraubkäfig 120 weist einen die Schraubenmutter 110 festhaltenden ebenen Halteabschnitt 122 und einen den Halteabschnitt 122 abstützenden Klemmabschnitt (Klemmfeder) 121 auf. Der Halteabschnitt 122 ist mit einer umlaufend geschlossenen Öffnung 123 ausgebildet, in der drehfest die Schraubenmutter 110 sitzt. Die vormontierte Einheit (Käfigmutter) aus Schraubenmutter 110 und Schraubkäfig 120 ist mit 100 bezeichnet.

Die Öffnung 123 im Halteabschnitt 122 des Schraubkäfigs 120 ist abschnittsweise größer ausgebildet als die Schraubenmutter 110, sodass in den betreffenden Abschnitten zwischen beiden ein Spalt 130 vorhanden ist, wie in der Draufsicht der Fig. 1b angedeutet. Der Spalt 130 ermöglicht einen geringen Bewegungsfreiraum zwischen der Schraubenmutter 110 und dem Schraubkäfig 120.

Die Öffnung 123 weist mehrere als Blechdurchzüge ausgebildete bzw. in axialer Richtung aufgestellte, quasi kragenartige ausgebildete Laschen 124 auf, die an den äußeren Drehmomentübertragungsflächen 114 der Schraubenmutter 110 anliegen und die Schraubenmutter 110 zwischen sich festklemmen. Wie aus der Draufsicht in Fig. 1b zu erkennen, sind die Laschen 124 beidseitig freigeschnitten, sodass diese besser in radialer Richtung federn können.

Die Öffnung 123 ist ferner mit zusätzlichen Formschlusselementen 125 ausgebildet, die zwischen den Laschen 124 angeordnet sind und an den Kanten 115 bzw. in den Kantenbereichen 115' der Schraubenmutter 110 anliegen. Die zusätzlichen Formschlusselementen 125 sind gabelartig ausgebildet. Die V-förmigen Innenbereiche an den gabelartigen Enden weisen Verrundungen 126 auf, um Kerbspannungen zu verhindern. Im unbelasteten bzw. drehmomentfreien Zustand sind die zusätzlichen Formschlusselemente 125 durch den Spalt 130 (s. o.) zur Schraubenmutter 110 beabstandet.

Wie oben bereits erläutert, sind die Laschen 124 im Wesentlichen zur axialen Fixierung der Schraubenmutter 110 und die zusätzlichen Formschlusselemente 125 im Wesentlichen zur Drehmomentabstützung vorgesehen. Beim Anziehen oder Lösen einer in die Schraubenmutter 110 eingreifenden Schraube wirkt auf die Schraubenmutter 110 ein Drehmoment M (siehe Fig. 1b), wodurch zunächst die Laschen 124 elastisch verformt werden, bis das spaltbedingte Spiel zwischen der Schraubenmutter 110 und dem Schraubkäfig 120 überwunden ist und dann eine Drehmomentabstützung über die zusätzlichen Formschlusselemente 125 erfolgen kann.

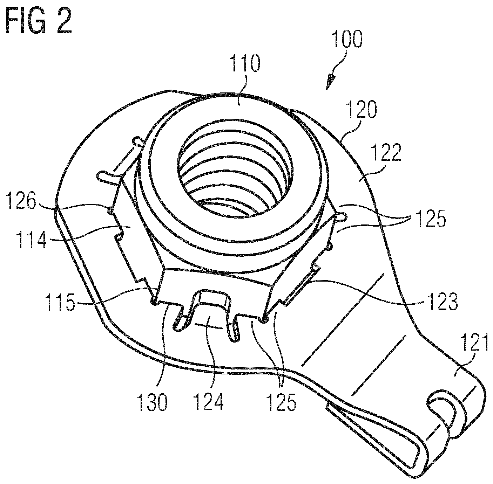

Das in Fig. 2 gezeigte nicht-erfindungsgemäße Ausführungsbeispiel unterscheidet sich zu dem in Fig. 1 gezeigten Ausführungsbeispiel im Wesentlichen dadurch, dass die Schraubenmutter 110 und der Halteabschnitt 122 des Schraubkäfigs 120 eine andere Relativausrichtung aufweisen und dass nur drei Laschen 124 vorgesehen sind, welche an jeder zweiten Drehmomentübertragungsfläche 114 der Schraubenmutter 110 anliegen. Gleichwohl sind analog zum Ausführungsbeispiel der Fig. 1 insgesamt sechs zusätzliche Formschlusselemente 125 vorgesehen, sodass auf die Schraubenmutter 110 ein im Wesentlichen gleich hohes Gegenmoment aufgebracht werden kann.

## Patentansprüche

1. Schraubenmutter (110) mit einem aus Blech gefertigten Schraubkäfig (120), der einen die Schraubenmutter (110) festhaltenden Halteabschnitt (122) und einen den Halteabschnitt (122) abstützenden Klemmabschnitt (121) aufweist,
wobei der Halteabschnitt (122) mit einer umlaufend geschlossenen Öffnung (123) ausgebildet ist, in der drehfest die Schraubenmutter (110) angeordnet ist,
wobei die Öffnung (123) abschnittsweise größer ausgebildet ist als die Schraubenmutter (110), sodass in den betreffenden Abschnitten zwischen beiden ein Spalt (130) vorhanden ist,
wobei die Öffnung (123) mehrere als Blechdurchzüge ausgebildete Laschen (124) aufweist, die an den seitlichen Drehmomentübertragungsflächen (114) der Schraubenmutter (110) anliegen,
wobei die Schraubenmutter (110) als Sechskantmutter ausgebildet und für jede Drehmomentübertragungsfläche (114) der Schraubenmutter (110) eine solche Lasche (124) vorgesehen ist,
wobei die Laschen (124) mittels Klemmeffekt eine axiale Fixierung der Schraubenmutter (110) im Schraubkäfig (120) bewirken,
**dadurch gekennzeichnet, dass**
die Öffnung (123) mit zusätzlichen Formschlusselementen (125) ausgebildet ist, die zur Drehmomentabstützung in den Kantenbereichen (115') zwischen den Drehmomentübertragungsflächen (114) an der Schraubenmutter (110) anliegen und an ihren der Schraubenmutter (110) zugewandten Enden gabelartig ausgebildet sind,
wobei jede Lasche (124) beidseitig zu den benachbarten Formschlusselementen (125) freigeschnitten ist.

2. Schraubenmutter (110) mit Schraubkäfig (120) nach Anspruch 1,
**dadurch gekennzeichnet, dass**
die Schraubenmutter (110) eine Beschichtung aufweist.

3. Schraubenmutter (110) mit Schraubkäfig (120) nach einem der vorhergehenden Ansprüche,
**dadurch gekennzeichnet, dass**
die Innenbereiche der gabelartigen Enden der Formschlusselemente (125) mit Verrundungen (126) ausgebildet sind.

4. Schraubenmutter (110) mit Schraubkäfig (120) nach einem der vorhergehenden Ansprüche,
**dadurch gekennzeichnet, dass**
die Schraubenmutter (110) mit einem M10-, M12- oder M14-Innengewinde ausgebildet ist.

5. Schraubenmutter (110) mit Schraubkäfig (120) nach einem der vorhergehenden Ansprüche,
**dadurch gekennzeichnet, dass**
der Schraubkäfig (120) als einstückiges Blechteil gefertigt ist.

## Claims

1. Screw nut (110) having a screw cage (120) which is produced from sheet metal and which has a retention portion (122) which retains the screw nut (110) and a clamping portion (121) which supports the retention portion (122),
wherein the retention portion (122) is constructed with a circumferentially closed opening (123) in which the screw nut (110) is arranged in a rotationally secure manner,
wherein the opening (123) is constructed in portions to be larger than the screw nut (110) so that in the relevant portions a gap (130) is provided between the two,
wherein the opening (123) has multiple flaps (124) which are constructed as rimmed holes in the sheet metal which bear on the lateral torque transmission faces (114) of the screw nut (110),
wherein the screw nut (110) is constructed as a hexagon nut and for each torque transmission face (114) of the screw nut (110) such a flap (124) is provided,
wherein the flaps (124) bring about an axial fixing of the screw nut (110) in the screw cage (120) by means of a clamping effect,
**characterized in that**
the opening (123) is constructed with additional positive-locking elements (125) which for torque support in the edge regions (115') between the torque transmission faces (114) bear on the screw nut (110) and at the ends thereof facing the screw nut (110) are constructed in a fork-like manner,
wherein each flap (124) is cut free at both sides with respect to the adjacent positive-locking elements (125).

2. Screw nut (110) having a screw cage (120) according to claim 1,
**characterized in that**
the screw nut (110) has a coating.

3. Screw nut (110) having a screw cage (120) according to any one of the preceding claims,
**characterized in that**
the inner regions of the fork-like ends of the positive-locking elements (125) are constructed with rounded portions (126).

4. Screw nut (110) having a screw cage (120) according to any one of the preceding claims,
**characterized in that**
the screw nut (110) is constructed with an M10, M12 or M14 internal thread.

5. Screw nut (110) having a screw cage (120) according to any one of the preceding claims,
**characterized in that**
the screw cage (120) is produced as an integral sheet metal component.

## Revendications

1. Écrou de vis (110) avec une cage de vis (120) fabriquée en tôle qui présente une section de retenue (122) maintenant l'écrou de vis (110) et une section de serrage (121) soutenant la section de retenue (122),
dans lequel la section de retenue (122) est formée avec une ouverture (123) fermée sur la périphérie, dans laquelle l'écrou de vis (110) est agencé sans pouvoir tourner,
dans lequel l'ouverture (123) est formée au moins par sections plus grande que l'écrou de vis (110) de sorte qu'une fente (130) soit présente dans les sections concernées entre les deux,
dans lequel l'ouverture (123) présente plusieurs languettes (124) formées comme passages de tôle qui reposent contre les surfaces de transmission de couple (114) latérales de l'écrou de vis (110),
dans lequel l'écrou de vis (110) est formé comme écrou hexagonal et une telle languette (124) est prévue pour chaque surface de transmission de couple (114) de l'écrou de vis (110),
dans lequel les languettes (124) provoquent au moyen de l'effet de serrage une fixation axiale de l'écrou de vis (110) dans la cage de vis (120),
**caractérisé en ce que**
l'ouverture (123) est formée avec des éléments à complémentarité de formes (125) supplémentaires qui reposent pour l'appui du couple dans les zones de bord (115') entre les surfaces de transmission de couple (114) contre l'écrou de vis (110) et sont formées en fourche au niveau de leurs extrémités tournées vers l'écrou de vis (110),
dans lequel chaque languette (124) est contre-dépouillée des deux côtés des éléments à complémentarité de formes (125) contigus.

2. Écrou de vis (110) avec une cage de vis (120) selon la revendication 1,
**caractérisé en ce que**
l'écrou de vis (110) présente un revêtement.

3. Écrou de vis (110) avec une cage de vis (120) selon l'une quelconque des revendications précédentes,
**caractérisé en ce que**
les zones intérieures des extrémités en fourche des éléments à complémentarité de formes (125) sont formées avec des arrondis (126).

4. Écrou de vis (110) avec une cage de vis (120) selon l'une quelconque des revendications précédentes,
**caractérisé en ce que**
l'écrou de vis (110) est formée avec un filetage intérieur M10, M12 ou M14.

5. Écrou de vis (110) avec une cage de vis (120) selon l'une quelconque des revendications précédentes,
**caractérisé en ce que**
la cage de vis (120) est fabriquée comme une pièce en tôle d'un seul tenant.
